## Europäisches Patentamt
## European Patent Office
## Office européen des brevets

(19)

(11) Veröffentlichungsnummer: **0 128 965**
**B1**

(12) # EUROPÄISCHE PATENTSCHRIFT

(45) Veröffentlichungstag der Patentschrift:
**12.08.87**

(21) Anmeldenummer: **83105858.1**

(22) Anmeldetag: **15.06.83**

(51) Int. Cl.⁴: **F 27 B 3/18,** C 21 C 5/52,
H 05 B 7/02, F 27 D 3/14

(54) **Verfahren zum Betreiben eines metallurgischen Schmelzofens und metallurgischer Schmelzofen.**

(43) Veröffentlichungstag der Anmeldung:
**27.12.84 Patentblatt 84/52**

(45) Bekanntmachung des Hinweises auf die Patenterteilung:
**12.08.87 Patentblatt 87/33**

(84) Benannte Vertragsstaaten:
**AT BE CH DE FR GB IT LI LU NL SE**

(56) Entgegenhaltungen:
**DE-A-1 804 007**
**DE-A-2 921 702**
**DE-A-2 944 269**
**DE-A-3 102 499**
**FR-A-2 218 398**

**Stahl und Eisen No. 9, 1983, Seiten 99, 110**
**37th. Electric Furnace Conference Proceedings,**
**Vol. 37, 1979, Detroit, pages 167-168**
**Radex Rundschau, H. 3, 1980, Seiten 187-196**

(73) Patentinhaber: **MANNESMANN Aktiengesellschaft,**
**Mannesmannufer 2, D-4000 Düsseldorf 1 (DE)**

(72) Erfinder: **Der Erfinder hat auf seine Nennung**
**verzichtet**

### Beschreibung

Die Erfindung betrifft ein Verfahren zum Betreiben eines metallurgishen Schmelzofens, insbesondere eines Elektro-, Plasma- bzw. eines mit Primärenergie beheizten Schmelzofens, bei dem nach Fertigschmelzen die Metallschmelze weitestgehend schlackenfrei abgestochen wird, indem die Metallschmelze außermittig an der Unterseite des Schmelzofens nach Öffnen eines Verschlußorgans senkrecht abgelassen wird, wobei der Abstichvorgang über das Kippen des Schmelzofens gesteuert wird, indem der Schmelzofen beim Abstechen bis maximal plus 15 Grad nach vorne gekippt wird, bei Verwendung einer wassergekühlten und einer feuerfesten Ofen-Wandfläche sowie einen metallurgischen Schmelzofen zur Durchführung des Verfahrens.

Derartige Betriebsverfahren bzw. Schmelzöfen arbeiten mit einem Bodenabstich, aus dem der Gießstrahl in Annäherung an eine laminare Strömung austritt. Es sind jedoch Zusatzmaßnahmen erforderlich, um Schlacke und flüssige Metallschmelze, insbesondere Stahlschmelze, vor dem Abstich an einem Durchmischen zu hindern. Das Stoppen mit auslaufender Schlacke am Ende des Abstechens erfolgt bei kippbaren Schmelzöfen in der Weise, indem bei exzentrischem Bodenabstich über die Kippbewegung des Ofens ein gezieltes Unterbrechen des Abstichvorganges eingeleitet wird.

Der weitestgehend schlackenfreie Abstich bildet die Voraussetzung für nachfolgende pfannenmetallurgische Behandlung mit nachfolgenden einflußarmen Gußwerkstoffen bzw. im Schmelzbetrieb für das Arbeiten mit flüssigem Sumpf, z.B. im Fall von Eisenschwamm- oder Schrotteinsatz.

Die Unterbrechung des Abstichvorganes bedeutet eine Beendigung des gesamten Abstichverfahrens, jedoch noch keine Anweisung, wie während des Abstichvorganges eine Einwirkung der sich ausbildenden Strömung auf die Schlacke verhindert werden kann.

Es ist bekannt (DE-OS 18 04 007), die Entleerung des Schmelzofens erst dann beginnen zu lassen, wenn das Verschlußorgan in der äußersten Kippstellung des Schmelzofens geöffnet wird. Diese Verfahrensweise nimmt auf das Zusammenspiel der Metallschmelzenströmungen, die insbesondere bei Stahl von besonderer Bedeutung sind, und Schlacke keinerlei Rücksicht.

Es ist ferner bekannt (DE-OS 29 44 269), den Schmelzofen mit einem Abstichvorbau (erkerartiger Vorsprung) zu versehen, dessen Innenraum mit dem Ofenraum über eine im seitlichen Bodenbereich des wannenförmigen Gefäßteils vorgesehene Durchflußöffnung verbunden ist. Hier wird jedoch die Metallschmelze innerhalb des Erkerteils mittels eines auf dem Metallbad schwimmenden Verschlußkörpers von der Schlacke getrennt, so daß ein schlackenfreies Abstechen vom Vorhandensein und von der Wirkung dieses schwimmenden Verschlußkörpers abhängig ist. Das Abbrechen des Abstichvorganges kann jedoch nur gegen Ende des Verfahrensabschnittes ein totales Mitauslaufen der Schlacke verhindern, um damit einen größeren Nachteil zu beseitigen.

Das eingangs bezeichnete Verfahren ist aus "Stahl und Eisen", 9/83 vom 9. Mai 1983, Seiten 99 bzw. 110, bekannt. Das beschriebene Verfahren gibt jedoch keine präzisen Angaben über das günstigste Oberflächenverhältnis der wassergekühlten zur feuerfesten Ofenwandfläche sowie über die Strömungsgeometrie beim Abstechen und über die Technik des schlackenfreien Abstechens.

Der Erfindung liegt deshalb die Aufgabe zugrunde, Einflüssen der Abstichströmung auf die auf der Metallschmelze (Stahlschmelze) schwimmende Schlacke während des Abstichvorganges entgegenzuwirken, so daß ein weitestgehend schlackenfreies Abstechen während des gesamten Abstichvorganges ermöglicht wird.

Die gestellte Aufgabe wird bei dem eingangs bezeichneten Verfahren bei Verwendung einer wassergekühlten und einer feuerfesten Ofen-Wandfläche gelöst, deren Verhältnis von etwa 7: 1 bis maximal 9: 1 liegt, wobei im Bereich des Verschlußorgans fortwährend eine unkritische Schmelzbadtiefe von 200 bis 400 mm über dem Gefäßboden beim Vorwärtskippen des Schmelzofens aufrechterhalten wird und wobei gegen Ende des Abstechens die auf der restlichen Metallschmelze schwimmende Schlacke durch Zurückkippen des Schmelzofens über Null Grad hinaus bis maximal minus 6 Grad aus dem Bereich des Verschlußorgans verlagert wird. Die zuerst genannte Maßnahme erspart im Betrieb Feuerfestmaterial und gestattet demnach die Anwendung bei einem kleinsten Kippwinkelbereich, der wiederum für das Abstechen erforderlich ist, ohne mit der Schlacke wassergekühlte Rohrwandelemente zu berühren, was schädlich wäre. Mit der genannten Schmelzbadtiefe ist es sodann möglich, eine unkritische Schmelzbadtiefe kontinuierlich einzuhalten, wodurch eine Potentialwirbelbildung, ausgehend von der Abstichöffnung, weitgehend vermieden wird, was wiederum einen Sog auf die Schlackenschicht vermeidet, so daß das Mitreißen von Schlacke in die abzustechende Metallschmelze verhindert wird. Der negative Kippwinkelbereich reicht nur bis minus 6 Grad, um die noch auf der Metallschmelze schwimmende Schlacke am Eintritt in die Abstichöffnung sicher zurückzuhalten.

Unkritisch ist die Schmelzbadtiefe von 200 mm außerdem deshalb, weil bei der genannten Schmelzbadtiefe noch keine Schlacke in die Ausgießöffnung gesogen wird oder wenn bei größerer Schmelzbadtiefe (400 mm) ausschließlich das Feuerfestmaterial berührt wird und nicht etwa die wassergekühlten Rohrwandelemente. Es wäre nämlich wenig sinnvoll, durch schlackenfreies Abstechen einerseits zwar eine Qualitätssteigerung des Endproduktes (Stahl) zu erzielen, andererseits jedoch eine hohen Anstieg der Betriebskosten (Feuerfestkosten, Investitionskosten, lay-out-Kosten und dgl.) in Kauf nehmen zu müssen. Die Erfindung gestattet daher eine Qualitätsverbesserung des Endproduktes Stahl bei gleichzeitiger Betriebskostensenkung.

Das Verfahren bewirkt verringerte Temperaturverluste, so daß bei einer jeweils um ca. 20 Grad C gegenüber der qualitäts- bzw. nachbehandlungsabhängigen Abstichtemperatur verminderten Abstichtemperatur die Metallschmelze abgelassen wird.

Der Bodenabstich gestattet eine näherungsweise laminare Strömung des Gießstrahls. Es wird dadurch möglich, daß das unter dem Schmelzofen befindliche Gefäß bis maximal 1 m des lotrechten Abstandes, gemessen vom Verschlußorgan bis zum Gefäßrand, eingestellt wird.

Der metallurgische Schmelzofen zur Durchführung des Verfahrens weist einen Erkerteil auf, und in dem Boden ist zumindest eine Abstichöffnung vorgesehen. An der Unterseite, außermittig, in dem Erkerteil, ist ein Verschlußorgan für das Abstechen der Schmelze angeordnet und der Schmelzofen ist mit einer wassergekühlten und einer feuerfesten Ofen-Wandfläche versehen. Der Übergang des Erkerteils auf den Ofeninnenraum übt einen Einfluß auf die Ausbildung des Potentialwirbels bzw. auf dessen Wirkungen aus.

Nach der weiteren Erfindung ist der Schmelzofen daher dahingehend verbessert, daß der Erkerteil mit seiner inneren Begrenzungswand im Grundriß angenähert trapezförmig ausgebildet ist, daß die Trapezschenkelwände im Bereich der dem Schmelzraum zugewandten Seite zu dem kreisförmigen bzw. ovalförmigen Ofeninnenraum jeweils tangential verlaufen und daß die Abstichöffnung auf der Trapezachse angeordnet ist. Solange die Schmelzbadtiefe unkritisch ist, kann sich der Potentialwirbel zumindest an drei Wänden abstützen, ohne einen Weg in die Schlackenschicht zu finden. Die Schlackenschicht senkt sich in einem solchen Fall beruhigt in Richtung auf den Gefäßboden ab.

Im allgemeinen sind bei derartigen Schmelzöfen Abstichöffnungen im Erkerteil an einer beliebigen Stelle vorgesehen. Gemäß einer Verbesserung der Erfindung sind sowohl im Ofeninnenraum als auch im Erkerteil jeweils ein gesondertes Abstichloch vorgesehen.

Mehrere Ausführungsbeispiele sind in der Zeichnung dargestellt, anhand deren auch das Verfahren erläutert wird. Es zeigen

Fig. 1 bis 4 die Verfahrensphasen für das Abstechen von Metallschmelze aus einem Schmelzofen mit exzentrischem Bodenabstich und

Fig. 5 die Draufsicht auf einen Schmelzofen mit Erkerteil.

Der metallurgische Schmelzofen für die Verfahrensstufen weist an der Ofenwanne 1 im Erkerteil 2 an der Unterseite das Verschlußorgan 3 auf, das z.B. aus einer anlegbaren Verschlußklappe bestehen kann. Die Abstichöffnung 4 ist während des Schmelzvorganges mit einer Füllmasse gefüllt und schützt das Verschlußorgan 3 vor dem Einfluß der Metallschmelze, die, sofern aus Stahl bestehend, eine Temperatur von über 1500 Grad C aufweist. In dieser Verfahrensphase reicht die Stahlschmelze 5 mit der Restschlackenschicht 6 knapp unter die wassergekühlte Wandfläche 7 und berührt lediglich die feuerfeste Wandfläche 8 aus feuerfesten Mauerwerkssteinen. Für die Entfernung der Hauptschlacke ist die Schlackenabstichöffnung 9 vorgesehen. Der Schmelzofen ist mittels einer weiter nicht dargestellten Kippvorrichtung kippbar und mit einem Kippantrieb versehen, der ein feinstufiges Kippen oder alternativ ein kontinuierliches Kippen gestattet.

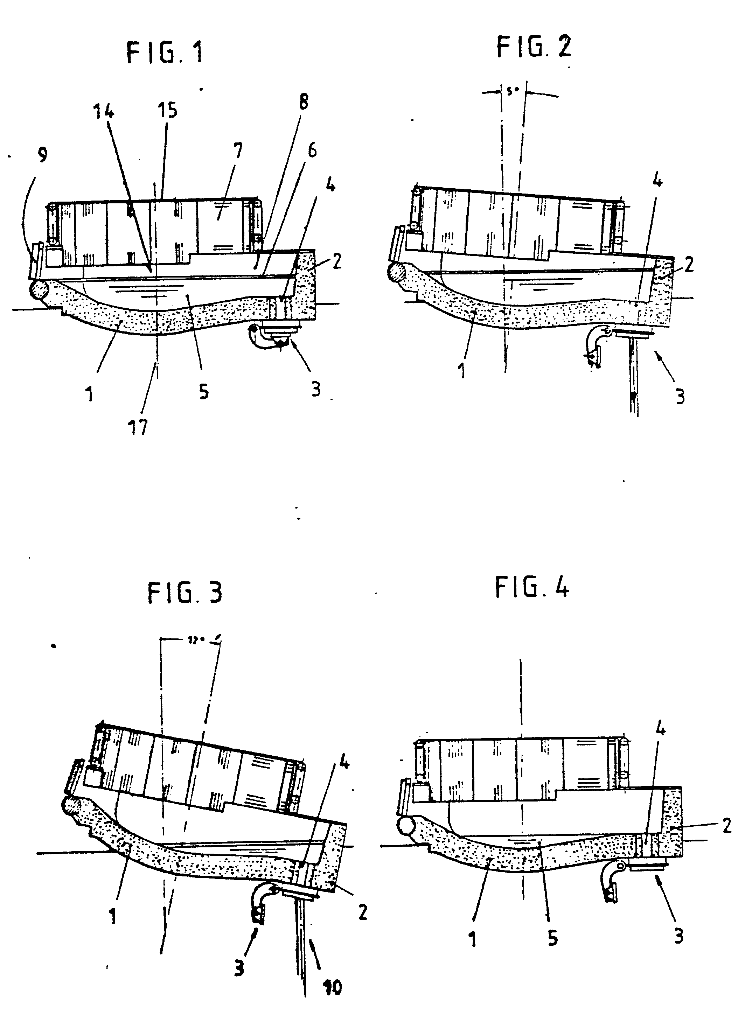

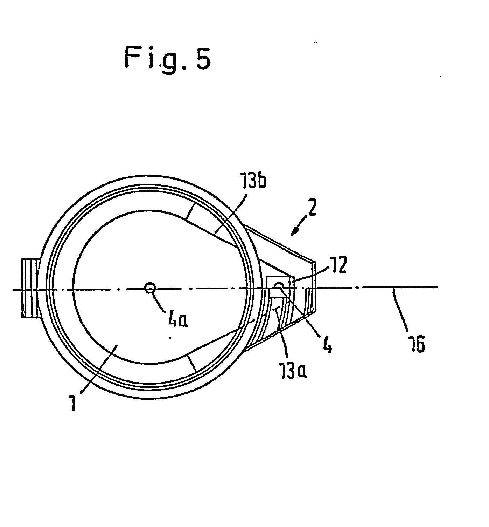

Das Oberflächenverhältnis der wassergekühlten Wandfläche 7 und der Feuerfestwandfläche 8 beträgt, wie gezeichnet, etwa 7 : 1. Nachdem das Verschlußorgan 3 geöffnet ist (Fig. 2) erreicht der Schmelzofen eine Kippstellung von ca. 5 Grad, wodurch eine ausreichend große Schmelzbadtiefe über der Abstichöffnung 4 vorhanden ist, was Potentialwirbel vermeidet. Bei kritisch werdender Schmelzbadtiefe (unter 200 mm über dem Gefäßboden) ist ein Potentialwirbel nicht mehr auszuschließen. Der Gießstrahl 10 verläßt nahezu in laminarer Strömung das geöffnete Verschlußorgan 3. Danach erfolgt ein in kleineren Stufen ausgeführtes oder kontinuierliches Kippen (Fig. 3) bis in eine Kipplage von ca. 8 Grad bis 12 Grad, falls erforderlich. Die Schmelzbadtiefe über der Abstichöffnung 4 reicht noch aus, um Potentialwirbel zu vermeiden. Für den Fall, daß in dieser Phase solche Potentialwirbelfäden auftreten, verbrauchen diese ihre Energie an den Wänden des trapezförmigen Erkerteils (Fig. 5). Die letzte Phase (Fig. 4) besteht darin, das Schmelzgefäß negativ zu kippen. Während dieses Zurückkippens gelangt die Schlacke von der Abstichöffnung 4 weg und gleitet meist zurück in die Ofenwanne 1. Der verbleibende Metallschmelzensumpf und die Schlacke werden für die nachfolgende Charge genutzt.

Der metallurgische Schmelzofen gemäß Fig. 5 weist den Erkerteil 2 auf, dessen innere Begrenzungswand 12 trapezförmig verläuft. Die Trapezschenkelwände 13a und 13b verlaufen in Richtung Schmelzraum 14. Die Abstichöffnung 4 ist auf der Trapezachse 16 angeordnet. Zusätzlich zu der Abstichöffnung 4 im Erkerteil 2 kann auch noch ein Abstichloch 4a in der Mittelachse 17 des Ofeninnenraums 15 vorgesehen sein.

## Patentansprüche

1. Verfahren zum Betreiben eines metallurgischen Schmelzofens, insbesondere eines Elektro-, Plasma- bzw. eines mit Primärenergie beheizten Schmelzofens, bei dem nach Fertigschmelzen die Metallschmelze weitestgehend schlackenfrei abgestochen wird, indem die Metallschmelze außermittig an der Unterseite des Schmelzofens nach Öffnen eines Verschlußorgans senkrecht abgelassen wird, wobei der Abstichvorgang über das Kippen des Schmelzofens gesteuert wird, indem der Schmelzofen beim Abstechen bis maximal plus 15 Grad nach vorne gekippt wird, bei Verwendung einer wassergekühlten und einer feuerfesten Ofen-Wandfläche, deren Verhältnis von etwa 7:1 bis maximal 9:1 liegt, wobei im Bereich des Verschlußorgans fortwährend eine unkritische Schmelzbadtiefe von 200 bis 400 mm über dem Gefäßboden beim Vorwärtskippen des Schmelzofens aufrechterhalten wird und wobei gegen Ende des Abstechens die auf der restlichen Metallschmelze schwimmende Schlacke durch Zurückkippen des Schmelzofens über Null Grad hinaus bis maximal minus 6 Grad aus dem Bereich des Verschlußorgans verlagert wird.

2. Verfahren nach Anspruch 1, dadurch gekennzeichnet, daß bei einer jeweils um ca. 20 Grad C gegenüber der qualitäts- bzw. nachbehandlungsabhängigen Abstichtemperatur verminderten Abstichtemperatur die Metallschmelze abgelassen wird.

3. Verfahren nach einem oder beiden der Ansprüche 1 und 2, dadurch gekennzeichnet, daß das unter dem Schmelzofen befindliche Gefäß bis maximal 1 m des lotrechten Abstandes, gemessen vom Verschlußorgan bis zum Gefäßrand, eingestellt wird.

4. Metallurgischer Schmelzofen mit einem Erkerteil, insbesondere Elektro-, Plasma- bzw. mit Primärenergie beheizter Schmelzofen, in dessen Boden zumindest eine Abstichöffnung vorgesehen ist, wobei an der Unterseite, außermittig, in dem Erkerteil ein Verschlußorgan für das Abstechen der Schmelze angeordnet ist, mit einer wassergekühlten und einer feuerfesten Ofen-Wandfläche, zur Durchführung des Verfahrens nach den Ansprüchen 1 bis 3, dadurch gekennzeichnet, daß der Erkerteil (2) mit seiner inneren Begrenzungswand (12) im Grundriß (Fig. 5) angenähert trapezförmig ausgebildet ist, daß die Trapezschenkelwände (13a,13b) im Bereich der dem Schmelzraum (14) zugewandten Seite zu dem kreisförmigen bzw. ovalförmigen Ofeninnenraum (15) jeweils tangential verlaufen und daß die Abstichöffnung (4) auf der Trapezachse (16) angeordnet ist.

5. Metallurgischer Schmelzofen nach Anspruch 4, dadurch gekennzeichnet,

daß sowohl im Ofeninnenraum (15) als auch im Erkerteil (2) jeweils ein gesondertes Abstichloch vorgesehen sind.

## Claims

1. Process suitable for the operation of a metallurgical melting furnace, in particular an electric arc, plasma or primary energy heated melting furnace, from which the molten metal can be tapped largely free of slag by letting the metal melt flow out vertically through a taphole which is arranged eccentrically in the underside of the furnace bottom and is provided with a closure, from which the metal flow is controlled by tilting the melting furnace forward not more than 15°, in which part of the furnace side walls is lined with refractories and part with water-cooled panels, the refractory to panel covered sidewall ratio being approximately 7:1 to 9:1 maximum, in which an uncritical bath depth of 200 to 400 mm is constantly maintained above the furnace shell bottom in the taphole closure area when the melting furnace is tilted forward and the slag which floats on the remaining molten metal pool towards tapping end is caused to flow away from the taphole when the furnace is tilted back beyond its neutral position to a maximum inclination of minus 6°.

2. Process according to Claim 1, characterised by the fact that the furnace can be tapped when the metal melt temperature is approximately 20°C lower than would be necessary in other conventional furnaces to meet the same grade and secondary treatment requirements.

3. Process according to claim 1 and/or two characterised by the fact that the vessel to receive the tapped metal is placed not more than 1 m before the furnace shell bottom as measured vertically between the closure and the receiving vessel rim.

4. Metallurgical melting furnace provided with a shell extension, in particular electric arc, plasma, or primary energy heated melting furnace, whose bottom is provided with at least one taphole, to whose underside an eccentric closure is arranged in the shell extension for the opening and closing of the taphole, part of the furnace shell inside lined with refractory material and part with water-cooled panels, designed for implementing the process in accordance with claims 1 to 3, characterised by the fact that the shell extension (2) with its inner limiting wall (12) is nearly trapezoidally shaped in its plan view (Fig. 5), the fact that the walls constituting the trapezoidal legs (13a, 13b) on the side which faces the melting space (14) are tangential to the circular or oval interior of the furnace (15) and that the taphole (4) is located on the trapezoidal centre line (16).

5. Metallurgical melting furnace according to claim 4, characterised by the fact that both the furnace interior (15) and the shell extension (2) are provided each with a separate taphole.

## Revendications

1. Procédé de mise en oeuvre d'un four de fusion métallurgique notamment d'un four de fusion électrique, à plasma ou alimenté par une énergie primaire, procédé selon lequel on prélève le bain de métal pratiquement sans laitier une fois la fusion terminée en évacuant le bain de métal de manière excentrée par la face inférieure du four après ouverture d'un organe de fermeture, par prélèvement vertical, l'opération de coulée étant commandée par le basculement du four de fusion en faisant basculer le four lors de la coulée, vers l'avant jusqu'à un maximum supérieur à 15 degrés et en utilisant une paroi de four refroidie à l'eau et une paroi de four réfractaire caractérisé en ce que le rapport des surfaces de la paroi refroidie à l'eau et celui de la paroi réfractaire est compris entre 7: 1 jusqu'au maximum 9: 1, et au niveau de l'organe de fermeture, on maintient en permanence une profondeur de bain, non critique de l'ordre de 200 à 400 mm par rapport au fond de la cuve en poursuivant le basculement du four et à la fin de la coulée, on déplace le laitier qui flotte sur le reste du bain métallique en basculant en arrière le four au-delà de la position de zéro degré jusqu'à un maximum de moins 6 degrés hors de la zone de l'organe de fermeture.

2. Procédé selon la revendication 1, caractérisé en ce qu'on déverse le bain de métal à une température de coulée réduite d'environ 20 degrés C par rapport à la temperature de coulée dont on dépend la qualité et le traitement ultérieur.

3. Procédé selon l'une ou les deux revendications 1 et 2, caractérisé en ce qu'on règle le récipient se trouvant en-dessous du four de fusion pour une distance verticale maximale de 1 m mesurée entre l'organe de fermeture et le bord du récipient.

4. Four de fusion métallurgique comportant un prolongement notamment four de fusion électrique à plasma ou à énergie primaire et dont le fond comporte au moins un trou de coulée, un organe de fermeture étant prévu sur la face inférieure de manière excentrée au niveau du prolongement pour la coulée du bain, four comportant une paroi de four refroidie par de l'eau et une paroi de four réfractaire, pour la mise en oeuvre du procédé selon les revendications 1 à 3, caractérisé en ce que le prolongement (2) et sa paroi intérieure (12) ont en vue en plan (figure 5) une forme pratiquement trapézoïdale, en ce que les parois formant les branches (13a, 13b) du trapèze sont tangentes au niveau du côté de la chambre de fusion (14) par rapport au volume intérieur (15) du four de forme circulaire ou ovale et en ce que le trou de coulée (4) se trouve dans l'axe (16) du trapèze.

5. Four de fusion métallurgique selon la revendication 4, caractérisé en ce qu'à la fois le volume intérieur (15) du four et le prolongement (2) comportent respectivement un trou de coulée particulier.

FIG. 1

FIG. 2

FIG. 3

FIG. 4

# Fig. 5